# EUROPÄISCHE PATENTANMELDUNG

(11) **EP 2 363 331 A1**
(43) Veröffentlichungstag der Anmeldung: **07.09.2011**
(21) Anmeldenummer: 10001929.8
(22) Anmeldetag: 25.02.2010
(51) Int. Cl.: B61B 1/00, B61D 3/18, B62D 53/06, G06Q 50/00

(54) **Verfahren für den kombinierten Verkehr und Sattelauflieger für Einsatz in dem Verfahren**

(71) Anmelder: Logipack International GmbH, 18573 Rambin (DE)
(72) Erfinder: Nordmann, Jürgen, 18573 Rambin (DE)
(74) Vertreter: Hauck Patent- und Rechtsanwälte

(57) **Zusammenfassung**

Verfahren für den kombinierten Verkehr auf Straße und Schiene, bei dem Sattelzüge (1) eingesetzt werden, die jeweils eine Zugmaschine (2) und einen Sattelauflieger (3) aufweisen, der einen Rahmen mit einem Königszapfen an der Unterseite und Angriffsmitteln für einen Kran an den Längsseiten, Radaufhängungen mit Rädern unterhalb des Rahmens und einen Aufbau oberhalb des Rahmens hat, wobei Rahmen und Angriffsmittel für eine maximale kranbare Nutzlast im Bereich von 35 bis 40 t dimensioniert sind, in einer Ladestelle Sattelzüge beladen werden, die Sattelzüge im Kurzvorlauf von der Ladestelle (5) zu einem Umschlagterminal (6) gefahren werden, das über mindestens eine Umschlagvorrichtung (8) verfügt, in dem Umschlagterminal die Sattelauflieger von den Zugmaschinen auf Taschenwagen (9) verladen werden, mit den Sattelaufliegern bepackte Taschenwagen im Hauptlauf auf der Schiene vom Umschlagterminal zu einem weiteren Umschlagterminal (12) gefahren werden, in dem die Sattelauflieger mittels einer Umschlagvorrichtung von Taschenwagen auf Sattelzugmaschinen verladen werden, mit denen sie Sattelzüge bilden, die Sattelzüge im Kurznachlauf vom Umschlagterminal zu einer weiteren Ladestelle (16) gefahren werden und in der weiteren Ladestelle zumindest ein Teil der Nutzlast aus den Sattelzügen entnommen wird.

## Beschreibung

Die Erfindung bezieht sich auf ein Verfahren für den kombinierten Verkehr auf Straße und Schiene und auf einen Sattelauflieger für den Einsatz in dem Verfahren.

Der kombinierte Verkehr ist ein übergeordneter Begriff für Gütertransporte, bei denen komplette Ladeeinheiten auf der Strecke von mindestens zwei unterschiedlichen Verkehrsträgern befördert werden. Die Ladeeinheiten sind meist Container, Wechselbehälter, Sattelanhänger oder komplette Lkw. Die Verkehrsträger sind Lkw, Eisenbahn oder Schiff. Die Güter bleiben sowohl während des Transportes als auch während der Umladungen zwischen den verschiedenen Transportarten in den Ladeeinheiten.

Der kombinierte Verkehr erfordert in der Regel mindestens zwei Umschlagvorgänge von dem einen auf den anderen Verkehrsträger. Hierfür gibt es Umschlagterminals, zwischen denen der Hauptlauf beispielsweise über die Schiene erfolgt. Zwischen den Umschlagterminals und dem Versender oder Empfänger muss die Ware per Lkw im Vor- und Nachlauf transportiert werden. Der kombinierte Verkehr hat den Vorteil, dass er die Straße entlastet und die CO₂ -Bilanz der Transporte verbessert.

Beim unbegleiteten kombinierten Verkehr werden Sattelauflieger als Ladeeinheiten eingesetzt. Sattelauflieger sind Anhänger, die einen Teil ihres Gewichtes auf die Achsen einer Sattelzugmaschine verlagern. Sie werden über einen Königszapfen an ihrer Unterseite mit einer Sattelplatte der Sattelzugmaschine verbunden. Für den Einsatz im kombinierten Verkehr muss der Sattelauflieger kranbar sein. Hierzu wird er mit Greifkanten versehen, an denen eine Hubvorrichtung angreifen kann.

Im Umschlagterminal werden Sattelauflieger von einem Kran oder einem mobilen Umschlaggerät auf Taschenwagen verladen. Ein Taschenwagen ist ein als Flachwagen ausgebildeter Drehgestellwagen. Der Sattelauflieger wird mit dem Königszapfen in einer Kupplungsplatte gesichert, die sich auf einem höhenverstellbaren und in Wagenlängsrichtung verschiebbaren Stützbock des Taschenwagens befindet. Zudem können die Räder mit Keilen auf dem Taschenwagen arretiert werden. Auf den Taschenwagen werden die Sattelauflieger über die Schiene zu einem anderen Umschlagterminal transportiert. Fahrer und Zugmaschinen bleiben am Verladeort. In dem anderen Umschlagterminal werden die Sattelauflieger von den Taschenwagen auf Zugmaschinen gesetzt.

Das maximal zulässige Gesamtgewicht des Sattelzuges beträgt 40 t. Berücksichtigt man ein Eigengewicht der Zugmaschine von etwa 7500 kg und ein Leergewicht des Sattelaufliegers von etwa 6500 kg, so beträgt die maximale Nutzlast des Sattelzuges etwa 26 t. Bei Sattelzügen für den kombinierten Verkehr ist das maximal zulässige Gesamtgewicht auf 44 t erhöht, so dass die maximale Nutzlast etwa 30 t beträgt.

Somit werden beim kombinierten Verkehr Sattelzüge mit maximal 30 t Nutzlast auf der Straße und der Schiene transportiert.

Davon ausgehend liegt der Erfindung die Aufgabe zugrunde, ein Verfahren für den kombinierten Verkehr auf Straße und Schiene zur Verfügung zu stellen, dass das Verkehrsaufkommen auf der Straße weiter reduziert und die CO₂-Bilanz der Transporte weiter verbessert. Außerdem soll ein Sattelauflieger für den Einsatz in dem Verfahren zur Verfügung gestellt werden.

Die Aufgabe wird durch ein Verfahren mit den Merkmalen des Anspruches 1 gelöst. Vorteilhafte Ausgestaltungen des Verfahrens sind in Unteransprüchen angegeben.

Bei dem erfindungsgemäßen Verfahren für den kombinierten Verkehr auf Straße und Schiene werden
- Sattelzüge eingesetzt, die jeweils eine Zugmaschine und einen Sattelauflieger aufweisen, der einen Rahmen mit einem Königszapfen an der Unterseite und Angriffsmittel für einen Kran an den Längsseiten, Radaufhängungen mit Rädern unterhalb des Rahmens und einen Aufbau oberhalb des Rahmens hat, wobei Rahmen und Angriffsmittel für eine maximale kranbare Nutzlast im Bereich von 35 bis 40 t dimensioniert sind,
- in einer Ladestelle Sattelzüge beladen, so dass sie eine Nutzlast im Bereich von 35 bis 40 t enthalten,
- die Sattelzüge im Kurzvorlauf von der Ladestelle zu einem Umschlagterminal gefahren, dass über mindestens eine Umschlagvorrichtung verfügt, die eine hinreichende Traglast aufweist, um Sattelauflieger mit einer Nutzlast im Bereich von 35 bis 40 t zu verladen,
- in dem Umschlagterminal die Sattelauflieger mit einer Nutzlast im Bereich von 35 bis 40 t mittels der Umschlagvorrichtung von den Zugmaschinen auf Taschenwagen verladen,
- mit den Sattelaufliegern bepackte Taschenwagen im Hauptlauf auf der Schiene vom Umschlagterminal zu einem weiteren Umschlagterminal gefahren, das über mindestens eine weitere Umschlagvorrichtung verfügt, die eine hinreichende Traglast aufweist, um Sattelauflieger mit einer Nutzlast im Bereich von 35 bis 40 t zu verladen,
- in dem weiteren Umschlagterminal die Sattelauflieger mit einer Nutzlast im Bereich von 35 bis 40 t mittels der weiteren Umschlagvorrichtung von Taschenwagen auf weitere Zugmaschinen verladen, mit denen sie weitere Sattelzüge bilden,
- die weiteren Sattelzüge im Kurznachlauf vom Umschlagterminal zu einer weiteren Ladestelle verladen und
- in der weiteren Ladestelle zumindest ein Teil der Nutzlast aus den Sattelzügen entladen.

Bei dem Verfahren werden erstmalig kranbare Sattelauflieger eingesetzt, bei denen Rahmen und Angriffsmittel für eine Umschlagvorrichtung so dimensioniert sind, dass sie mit einer Nutzlast im Bereich von 35 bis 40 t beladen kranbar sind. Ferner werden bei dem Verfahren Umschlagterminals genutzt, die über mindestens eine Umschlagvorrichtung verfügt, die in der Lage ist, einen derartigen Sattelauflieger zu verladen, wenn er eine Nutzlast im Bereich von 35 bis 40 t bestückt ist. Unter Berücksichtigung eines Leergewichtes des Sattelaufliegers im Bereich von 4,5 bis 7,5 t bedeutet dies, dass die Umschlagvorrichtung in der Lage sein muss, ein Gesamtgewicht im Bereich von 39,5 bis 47,5 t zu heben. Die Umschlagvorrichtung kann ein (Portal-)Kran oder ein mobiles Umschlaggerät sein. Wenn der Sattelauflieger maximal beladen ist, wird unter Berücksichtigung seines Leergewichtes und eines Eigengewichtes der Zugmaschine von etwa 7500 kg ein Gesamtgewicht des Sattelzuges von 47 bis 55 t erreicht, das grundsätzlich im Straßenverkehr nicht zugelassen ist. Die Ladestellen können jedoch auf demselben Gelände wie die Umschlagterminals angeordnet sein oder mit diesen über private Wegestrecken verbunden sein, so dass eine behördliche Genehmigung für den Transport zwischen Ladestelle und Umschlagterminal nicht erforderlich ist. Außerdem ist der Betrieb von Sattelzügen mit derartig hohen Gesamtgewichten auf kurzen und genau festgelegten öffentlichen Wegen technisch sehr gut beherrschbar und deshalb Sondergenehmigungen zugänglich. Der Kurzvorlauf und der Kurznachlauf erstrecken sich bevorzugt maximal über eine Strecke von 10 km, weiterhin bevorzugt von 5 km, weiterhin bevorzugt von 2 km. Deshalb ist es möglich, Sattelzüge mit derartig hohen Gesamtgewichten im Kurzvorlauf von einer Ladestelle zum Umschlagterminal und im Kurznachlauf von einem weiteren Umschlagterminal zu einer weiteren Ladestelle zu transportieren. Infolgedessen wird bei dem erfindungsgemäßen Verfahren die Transportkapazität um 5 bis 10 t Nutzlast pro Sattelauflieger gesteigert und dementsprechend das Verkehrsaufkommen auf der Straße reduziert und die CO₂-Bilanz verbessert.

Die Ladestelle kann mit dem Versender der zu transportierenden Waren zusammenfallen, beispielsweise bei einem Hersteller oder Händler der Waren angesiedelt sein. Die weitere Ladestelle kann mit dem Empfänger der Waren zusammenfallen, beispielsweise bei einem Großhändler oder einem Zentrallager des Einzelhandels. Die Ladestelle kann aber auch der Umladung von Ware, die vom Versender zu der Ladestelle geliefert wird, auf die Sattelzüge des Kurzvorlaufs dienen. Ferner kann die weitere Ladestelle der Umladung von Ware dienen, die von den Sattelzügen des Kurznachlaufs geliefert werden, um die Ware zu Empfängern zu transportieren.

Gemäß einer Ausgestaltung werden Transporteinheiten bei mindestens einem Versender mit einer Nutzlast von bis zu 30 t beladen und die Transporteinheiten in einem weiteren Vorlauf vom Versender zur Ladestelle gefahren, in der die Sattelzüge beladen werden. Für den Straßenverkehr zugelassene Transporteinheiten mit einer Nutzlast von bis zum 30 t stehen zur Verfügung, beispielsweise in Form von Sattelzügen mit einem maximalen Gesamtgewicht von 44 t. Infolgedessen kann der weitere Vorlauf über längere Strecken auf öffentlichen Straßen erfolgen.

Gemäß einer bevorzugten Ausgestaltung sind die Transporteinheiten Sattelzüge mit Sattelaufliegern mit einer kranbaren Nutzlast im Bereich von 35 bis 40 t, die beim Versender mit einer Nutzlast von bis zum 30 t beladen werden und in dem weiteren Vorlauf zur Ladestelle gefahren werden, in der sie mit zusätzlicher Nutzlast beladen werden, bis sie mit einer Nutzlast im Bereich von 35 bis 40 t beladen sind. Die Transporteinheiten müssen dann in der Ladestelle nicht entladen werden, sondern können zusätzlich bis zur gesamten kranbaren Nutzlast beladen werden. Die solchermaßen beladenen Sattelzüge werden im Kurzvorlauf von der Ladestelle zum Umschlagterminal gefahren und dort werden die beladenen Sattelauflieger auf Taschenwagen verladen.

Gemäß einer weiteren Ausgestaltung werden Transporteinheiten mit einer Nutzlast von bis zu 30 t in einem weiteren Nachlauf von der weiteren Ladestelle zu mindestens einem Empfänger gefahren. Für den Straßenverkehr zugelassene Transporteinheiten mit einer Nutzlast von bis zum 30 t stehen zur Verfügung, beispielsweise in Form von Sattelzügen mit einem maximalen Gesamtgewicht von 44 t. In der weiteren Ladestelle kann Nutzlast aus Sattelaufliegern mit einer kranbaren Nutzlast im Bereich von 35 bis 40 t in die Transporteinheiten verladen und auf öffentlichen Wegen zum Empfänger transportiert werden.

Gemäß einer bevorzugten Ausgestaltung sind die weiteren Transporteinheiten im Kurznachlauf zur weiteren Ladestelle gefahrene Sattelzüge mit einer kranbaren Nutzlast im Bereich von 35 bis 40 t, denen in der weiteren Ladestelle Nutzlast entnommen wird, so dass sie eine Nutzlast von bis zu 30 t enthalten. Im teilweise entladenen Zustand dürfen die Sattelzüge im weiteren Nachlauf auf öffentlichen Wegen gefahren werden.

Der weitere Vorlauf und/oder der weitere Nachlauf können über eine Distanz von bevorzugt bis zu 200 km, weiterhin bevorzugt bis zu 150 km erfolgen.

Bei der Nutzlast handelt es sich grundsätzlich um beliebige Güter. Bevorzugt handelt es sich um Halbfertigware oder Fertigware. Gemäß einer bevorzugten Ausgestaltung umfasst die Nutzlast Getränkebehälter, die in Ladungsträger eingesetzt sind, die übereinander gestapelt sind. Die Getränkebehälter sind bevorzugt Flaschen (Mehrwegflaschen oder Einwegflaschen) oder Dosen. Gemäß einer Ausgestaltung sind die Ladungsträger Getränkekisten. Die Ladungsträger sind bevorzugt Trägerplatten, die an der Oberseite Aufnahmen für die Bodenbereiche von Getränkebehältern aufweisen und die an der Unterseite Aufnahmen für die Kopfbereich von Getränkebehältern haben. Gemäß einer weiteren Ausgestaltung sind die Trägerplatten auf Getränkekisten stapelbar. Gemäß einer weiteren Ausgestaltung umfassen die Ladungsträger sowohl Trägerplatten als auch Getränkekisten.

Gemäß einer weiteren Ausgestaltung umfasst die Nutzlast Getränkebehälter, die in Ladungsträger eingesetzt sind, die übereinander gestapelt und auf Paletten gesetzt sind. Bevorzugt kommen Europaletten zum Einsatz.

Gemäß einer weiteren Ausgestaltung umfasst die Nutzlast von 35 bis 40 t mehrere aufeinander gesetzte Stapel mit Getränkebehältern und Ladungsträgern auf Paletten. Bevorzugt umfasst die Nutzlast aufeinander gesetzte Stapel mit fünf Lagen Getränkebehältern auf Ladungsträgern auf einer Palette und einem darauf angeordneten Stapel umfassend vier Lagen Getränkebehälter auf Ladungsträgern auf einer weiteren Palette.

Gemäß einer weiteren Ausgestaltung werden bis zu 34 Paletten auf den Boden des Sattelaufliegers aufgesetzt und auf die 34 Paletten mit jeweils 5 Lagen Getränkebehältern aufgesetzt und darauf bis zu 14 Paletten mit jeweils 4 Lagen Getränkebehältern aufgesetzt.

Gemäß einer bevorzugten Ausgestaltung des Verfahrens wird zwischen den Stapeln ein rutschhemmendes Material angeordnet. Gemäß einer bevorzugten Ausgestaltung ist das rutschhemmende Material flexibles Bahnmaterial bzw. eine Plane.

Ferner wird die Aufgabe durch einen Sattelauflieger mit den Merkmalen von Anspruch 10 gelöst. Vorteilhafte Ausgestaltungen des Sattelaufliegers sind in Unteransprüchen angegeben.

Der erfindungsgemäße Sattelauflieger für den kombinierten Verkehr auf Straße und Schiene hat
- einen Rahmen mit einem Königszapfen an der Unterseite und Angriffsmitteln für einen Kran an den Längsseiten,
- Radaufhängungen mit Rädern unterhalb des Rahmens,
- einen Aufbau oberhalb des Rahmens mit einem Laderaum,
- wobei Rahmen und Angriffsmittel für eine maximale kranbare Nutzlast im Bereich von 35 bis 40 t dimensioniert sind.

Gemäß einer Ausgestaltung weist der Sattelauflieger ein Eigengewicht im Bereich von 4,5 bis 7,5 t auf. Bevorzugt hat er ein Eigengewicht von etwa 6,5 t.

Gemäß einer Ausgestaltung sind die Angriffsmittel Greifkanten. Bevorzugt sind sie Greiferzangenleisten.

Gemäß einer bevorzugten Ausgestaltung hat der Sattelauflieger einen Schiebeplanenaufbau. Bei Ausführung mit Schiebeplanenaufbau ist der Aufbau des Sattelaufliegers statt mit starren Wänden auf der linken und der rechten Seite mit einer sogenannten Gardinenplane ausgestattet. Diese ist oben an Rollen befestigt und unten mit Spanngurten am Fahrzeugboden fixiert. Die Schiebeplane kann wie eine Gardine aufgezogen werden. Der Schiebeplanenaufbau ist besonders leicht und ermöglicht besonders hohe Nutzlasten.

Rungen, die die Dachkonstruktion abstützen, sind bevorzugt zur Seite verschiebbar. Der Sattelauflieger ist nach Verschieben der Schiebeplane und der Rungen von der Seite oder nach Öffnen einer Hecktür von hinten be- und entladbar.

Gemäß einer weiteren Ausgestaltung hat der Laderaum eine lichte Ladehöhe von etwa 3000 mm. Dies begünstigt den Transport von Getränkebehältern in übereinander angeordneten Stapeln, wobei der untere Stapel eine Europalette und fünf Lagen Flaschen in Trägerplatten und eine Trägerplatte auf der obersten Lage umfasst und die obere Lage eine Europalette und vier Lagen Flaschen in Trägerplatten auf der Europalette sowie einer Trägerplatte auf der obersten Lage Flaschen umfasst.

Gemäß einer Ausgestaltung ist an der Innenseite der vorderen Stirnwand des Sattelaufliegers eine Rolle angeordnet, auf der ein flexibles, rutschfestes Material aufgerollt ist, das in Längsrichtung des Laderaums nach hinten abwickelbar ist. Gemäß einer weiteren Ausgestaltung ist das rutschhemmende Material auf einer Höhe hinter der vorderen Stirnwand gelagert, die etwa der Höhe eines Stapels aus einer Europalette und fünf Lagen Flaschen auf Trägerplatten mit einer Trägerplatte auf der obersten Lage Flaschen umfasst.

Gemäß einer weiteren Ausgestaltung ist das rutschhemmende flexible Material an den Seiten und/oder an der hinteren Stirnwand des Aufbaues fixierbar.

Gemäß einer weiteren Ausgestaltung ist die Rolle mit einem Getriebe zum Aufwickeln und/oder Abwickeln der Rolle verbunden.

Gemäß einer weiteren Ausgestaltung weist der Sattelauflieger ein höhenverstellbares Dach auf, das eine lichte Ladehöhe von mindestens 3000 mm einstellbar ist. Dies ermöglicht, das Dach auf eine Höhe einzustellen, die das Beladen und Entladen des Sattelaufliegers erleichtert.

Der Sattelauflieger kann einen Aufbau mit einem festen Dach aufweisen. Bevorzugt ist das Dach ein Schiebeverdeck. Das Schiebeverdeck hat ein verhältnismäßig geringes Eigengewicht und kommt der maximalen Nutzlast des Sattelaufliegers zugute.

Bei einem Sattelauflieger mit einer lichten Ladehöhe von etwa 3000 mm ist es erforderlich, beim Verladen des Sattelaufliegers auf den Taschenwagen den Königszapfen abzusenken. Bevorzugt sind hierfür gemäß einer Ausgestaltung die Radaufhängungen bezüglich des Rahmens höhenverstellbar, so dass die Höhe des Königszapfens bezüglich der Aufstandsfläche der Räder in einem Bereich von zumindest 880 bis 960 mm variierbar ist. Gemäß einer weiteren Ausgestaltung hat der Sattelauflieger zwischen Rahmen und Radaufhängung eine pneumatische Federung. Die pneumatische Federung ermöglicht eine Höhenverstellung der Radaufhängungen bezüglich des Rahmens. Hierdurch kann die Höhe des Königszapfens bezüglich der Aufstandsfläche der Räder eingestellt werden.

Gemäß einer Ausgestaltung weist der Sattelauflieger im Straßenbetrieb und im Bahnbetrieb eine Gesamthöhe von etwa 4000 bis 4010 mm auf.

Die Erfindung wird nachfolgend anhand der anliegenden Zeichnung eines Ausführungsbeispieles näher erläutert:

In den Zeichnungen zeigen:
- Fig. 1: eine grobschematische Funktionsskizze des erfindungsgemäßen Verfahrens;
- Fig. 2: einen mit einer Nutzlast von etwa 38 t aus Getränkeflaschen, Trägerplatten und Europaletten bepackten Sattelauflieger für den kombinierten Verkehr in einem Vertikalschnitt.

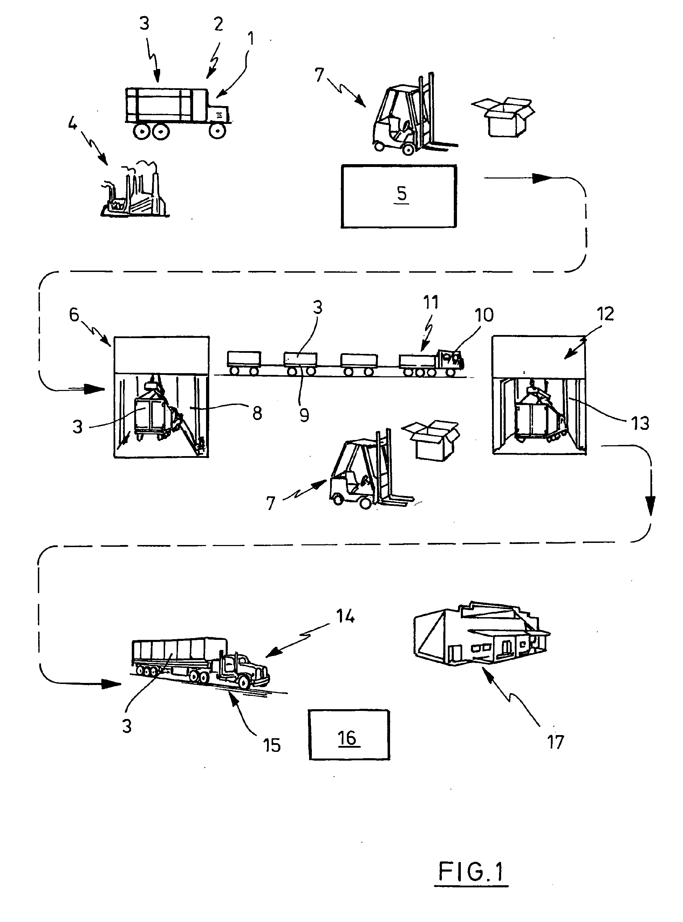

Gemäß Fig. 1 werden Sattelzüge 1 mit Zugmaschinen 2 und Sattelaufliegern 3 beim Versender 4 mit einer Nutzlast von bis zu 30 t umfassend Getränkeflaschen, Trägerplatten und Europaletten bepackt.

Die Sattelzüge 1 werden im Vorlauf zu einer Ladestelle 5 gefahren, die nahe einem Umschlagterminal 6 angeordnet ist.

In der Ladestelle 5 wird mittels Hubstaplern 7 zusätzliche Nutzlast in den Sattelauflieger 3 verladen, bis dieser eine Nutzlast im Bereich von 35 bis 40 t enthält. Die weitere Nutzlast wird mittels weiterer Sattelzüge zur Ladestelle 5 gefahren. Hierbei kann es sich um konventionelle Sattelzüge handeln, deren maximale Nutzlast 30 t beträgt.

In diesem Zustand wird der Sattelzug 1 von der Ladestelle 5 im Kurzvorlauf zum Umschlagterminal 6 gefahren.

Im Umschlagterminal 6 wird der Sattelauflieger 3 mittels eines Portalkrans 8 von der Zugmaschine 2 abgenommen und auf einen Taschenwagen 9 verladen. Aus einer Vielzahl Taschenwagen 9 und Triebwagen 10 wird ein Zug 11 zusammengestellt.

Der Zug 11 wird im Hauptlauf vom Umschlagterminal 6 zu einem weiteren Umschlagterminal 12 gefahren, das in einigen 100 km Entfernung vom Umschlagterminal 6 angeordnet ist.

Im weiteren Umschlagterminal 12 werden die Sattelauflieger 3 mittels eines weiteren Portalkrans 13 von den Taschenwagen 9 auf weitere Zugmaschinen 14 verladen und bilden mit diesen gemeinsam weitere Sattelzüge 15.

Die weiteren Sattelzüge 15 fahren im Kurz-Nachlauf zu einem in kurzer Entfernung vom weiteren Umschlagterminal 12 angesiedelten weiteren Ladestelle 16. In der weiteren Ladestelle 16 wird Nutzlast aus dem Sattelauflieger 3 entnommen, so dass eine Nutzlast von maximal 30 t im Sattelauflieger 3 verbleibt. In diesem Zustand wird der Sattelzug 15 von der weiteren Ladestelle 16 zum Empfänger 17 gefahren. Dort wird er ausgeladen.

Von der weiteren Ladestelle 16 kann die abgeladene Nutzlast mittels weiterer Sattelzüge zu Empfängern 17 transportiert werden. Hierbei kann es sich um Sattelzüge konventioneller Bauart handeln, die maximal 30 t Nutzlast transportieren können.

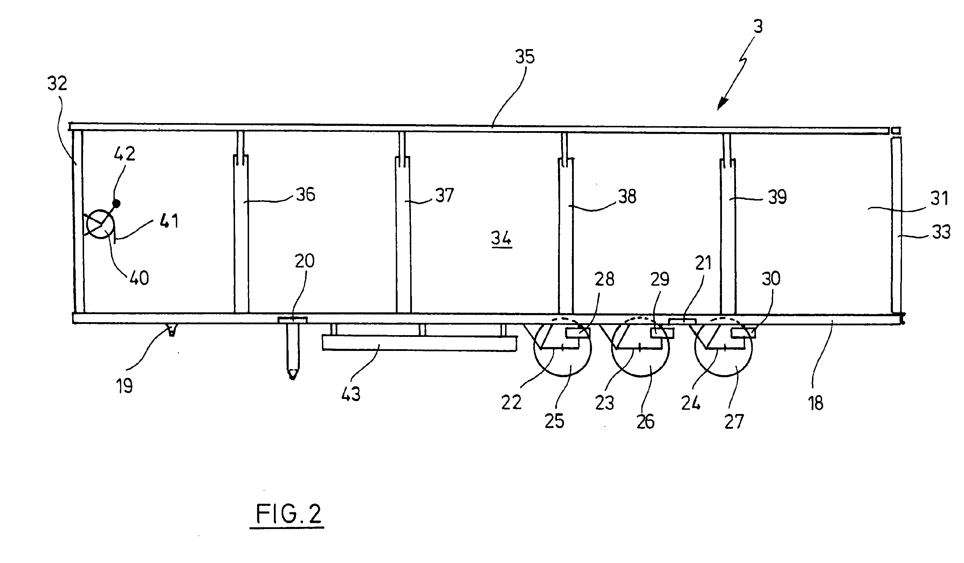

Gemäß Fig. 2 hat ein Sattelauflieger 3 einen Rahmen 18 mit einem Königszapfen 19 an der Unterseite. Der Rahmen 18 ist bevorzugt ein Leiterrahmen. Ferner sind an beiden Längsseiten des Rahmens 18 jeweils zwei Greifkanten 20, 21 für einen Kran vorhanden. Der Rahmen 18 und die Greifkanten 20, 21 sind für eine maximale kranbare Nutzlast im Bereich von 35 bis 40 t dimensioniert.

Unterhalb des Rahmens 18 befinden sich Radaufhängungen 22, 23, 24 mit Rädern 25, 26, 27, die über eine pneumatische Federung 28, 29, 30 am Rahmen 18 abgestützt sind.

Auf dem Rahmen 18 hat der Sattelauflieger 3 einen Aufbau 31. Der Aufbau 31 hat vordere und hintere Stirnwände 32, 33, wobei die hintere Stirnwand 33 eine öffenbare Tür aufweist.

Die Seitenwände des Aufbaus sind von Schiebeplanen 34 gebildet.

Der Aufbau 31 hat ein Dach 35, das über Rungen 36, 37, 38, 39 höhenverstellbar am Rahmen 18 abgestützt ist. Das Dach 35 ist als Schiebeverdeck ausgebildet.

Hinter der vorderen Stirnwand 32 ist eine Rolle 40 montiert, auf der ein flexibles, rutschhemmendes Material 41 aufgerollt ist. Ein Antriebsmechanismus 42 zum Ab-und Aufwickeln des flexiblen Materials 41 ist mit der Rolle 40 gekoppelt.

Unter den Längsseiten des Rahmens ist jeweils ein Unterfahrschutz 43 angeordnet.

Der Sattelauflieger 3 ist mit - nicht gezeigten - Getränkebehältern beladen. Dabei sind jeweils zwei Stapel übereinander geordnet, die folgendermaßen zusammengesetzt sind:
Der untere Stapel weist unten eine Europalette auf. Auf der Europalette sind fünf Lagen aus jeweils acht in einer Ebene angeordneten Ladungsträgern und diese eingesetzte Flaschen angeordnet. Auf der obersten Lage Flaschen ist eine weitere Trägerplatte angeordnet.

Oben auf diesen Trägerplatten ist das rutschhemmende Material 41 angeordnet. Darauf ist eine weitere Europalette gesetzt. Auf der weiteren Europalette sind vier weitere Lagen jeweils aus Ladungsträgern und in diese eingesetzten Flaschen gestapelt. Auf der obersten Lage Flaschen sind wiederum Trägerplatten zur Stabilisierung angeordnet. Die Flaschen können im befüllten oder entleerten Zustand transportiert werden.

## Patentansprüche

1. Verfahren für den kombinierten Verkehr auf Straße und Schiene, bei dem
- Sattelzüge eingesetzt werden, die jeweils eine Zugmaschine und einen Sattelauflieger aufweisen, der einen Rahmen mit einem Königszapfen an der Unterseite und Angriffsmitteln für einen Kran an den Längsseiten, Radaufhängungen mit Rädern unterhalb des Rahmens und einen Aufbau oberhalb des Rahmens hat, wobei Rahmen und Angriffsmittel für eine maximale kranbare Nutzlast im Bereich von 35 bis 40 t dimensioniert sind,
- in einer Ladestelle Sattelzüge beladen werden, so dass sie eine Nutzlast im Bereich von 35 bis 40 t enthalten,
- die Sattelzüge im Kurzvorlauf von der Ladestelle zu einem Umschlagterminal gefahren werden, das über mindestens eine Umschlagvorrichtung verfügt, die eine hinreichende Traglast aufweist, um Sattelauflieger mit einer Nutzlast von 35 bis 40 t zu heben,
- in dem Umschlagterminal die Sattelauflieger mit einer Nutzlast im Bereich von 35 bis 40 t mittels der Umschlagvorrichtung von den Zugmaschinen auf Taschenwagen verladen werden,
- mit den Sattelaufliegern bepackte Taschenwagen im Hauptlauf auf der Schiene vom Umschlagterminal zu einem weiteren Umschlagterminal gefahren werden, das über mindestens eine Umschlagvorrichtung verfügt, die eine hinreichende Traglast aufweist, um Sattelauflieger mit einer Nutzlast von 35 bis 40 t zu heben,
- in dem weiteren Umschlagterminal die Sattelauflieger mit einer Nutzlast im Bereich von 35 bis 40 t mittels der Umschlagvorrichtung von Taschenwagen auf Sattelzugmaschinen verladen werden, mit denen sie Sattelzüge bilden,
- die Sattelzüge im Kurznachlauf vom Umschlagterminal zu einer weiteren Ladestelle gefahren werden und
- in der weiteren Ladestelle-zumindest ein Teil der Nutzlast aus den Sattelzügen entnommen wird.

2. Verfahren nach Anspruch 1, bei dem Transporteinheiten bei mindestens einem Versender mit einer Nutzlast von bis zu 30 t beladen werden und die Transporteinheiten in einem weiteren Vorlauf vom Versender zur Ladestelle gefahren werden, in der die Sattelzüge beladen werden.

3. Verfahren nach Anspruch 2, bei dem die Transporteinheiten Sattelzüge mit Sattelaufliegern mit einer kranbaren Nutzlast im Bereich von 35 bis 40 t sind, die beim Versender mit einer Nutzlast von bis zu 30 t beladen werden, in dem weiteren Vorlauf zur Ladestelle gefahren werden, in der sie mit zusätzlicher Nutzlast beladen werden, so dass sie eine gesamte Nutzlast im Bereich von 35 bis 40 t enthalten.

4. Verfahren nach einem der Ansprüche 1 bis 3, bei dem Transporteinheiten mit einer Nutzlast von bis zu 30 t in einem weiteren Nachlauf von der weiteren Ladestelle zu mindestens einem Empfänger gefahren werden.

5. Verfahren nach Anspruch 4, bei dem die weiteren Transporteinheiten im Kurznachlauf zur weiteren Ladestelle gefahrene Sattelzüge mit Sattelaufliegern mit einer kranbaren Nutzlast im Bereich von 35 bis 40 t sind, denen in der weiteren Ladestelle Nutzlast entnommen wird, so dass sie eine Nutzlast von bis zu 30 t enthalten.

6. Verfahren nach einem der Ansprüche 1 bis 5, bei dem die Nutzlast Getränkebehälter umfasst, die in Ladungsträger eingesetzt sind, die übereinander gestapelt werden.

7. Verfahren nach einem der Ansprüche 1 bis 6, bei dem die Nutzlast Getränkebehälter umfasst, die in Ladungsträger eingesetzt sind, die übereinander gestapelt und auf Paletten gesetzt werden.

8. Verfahren nach einem der Ansprüche 1 bis 7, bei dem die Nutzlast mehrere übereinander gestapelte Stapel mit Getränkebehältern und Ladungsträgern auf Paletten umfasst.

9. Verfahren nach einem der Ansprüche 1 bis 8, bei dem bis zu 34 Paletten auf den Boden des Sattelaufliegers aufgesetzt und darauf bis zu 14 Paletten aufgesetzt werden.

10. Sattelauflieger für den kombinierten Verkehr auf Straße und Schiene mit
- einem Rahmen mit einem Königszapfen an der Unterseite und Angriffsmitteln für einen Kran an den Längsseiten,
- Radaufhängungen mit Rädern unterhalb des Rahmens,
- einem Aufbau oberhalb des Rahmens mit einem Laderaum,
- wobei Rahmen und Angriffsmittel für eine maximale kranbare Nutzlast im Bereich von 35 bis 40 t dimensioniert sind.

11. Sattelauflieger nach Anspruch 10, der ein Eigengewicht im Bereich von 4,5 bis 7,5 t aufweist.

12. Sattelauflieger nach Anspruch 10 oder 11, bei dem die Angriffsmittel Greifkanten sind.

13. Sattelauflieger nach einem der Ansprüche 10 bis 12, der einen Schiebeplanenaufbau hat.

14. Sattelauflieger nach einem der Ansprüche 10 bis 13, bei dem der Laderaum eine lichte Ladehöhe von etwa 3000 mm hat.

15. Sattelauflieger nach einem der Ansprüche 10 bis 14, der ein bezüglich des Rahmens höhenverstellbares Dach aufweist.

16. Sattelauflieger nach einem der Ansprüche 10 bis 15, der ein festes Dach oder ein Schiebeverdeck aufweist.

17. Sattelauflieger nach einem der Ansprüche 10 bis 16, der zwischen Rahmen und Radaufhängungen eine pneumatische Federung hat.

18. Sattelauflieger nach einem der Ansprüche 10 bis 16, der im Straßenbetrieb und im Bahnbetrieb eine Gesamthöhe von etwa 4000 bis 4010 mm aufweist.
